# EUROPEAN PATENT SPECIFICATION

(11) **EP 3 778 025 B1**
(45) Date of publication and mention of the grant of the patent: **08.05.2024**
(21) Application number: 19727062.2
(22) Date of filing: 11.04.2019
(51) Int. Cl.: B01L 3/00, B65D 79/02, G01N 35/00, G06Q 10/08, G06Q 30/00, G08B 13/12, H04L 9/32, F25D 21/00, B65D 81/38, G01N 1/00, G06Q 10/0832

(54) **CASE FOR PACKAGING AND MONITORING BIOLOGICAL SAMPLES**
BEHÄLTER ZUR VERPACKUNG UND ÜBERWACHUNG VON BIOLOGISCHEN PROBEN
ÉTUI D'EMBALLAGE ET DE SURVEILLANCE D'ÉCHANTILLONS BIOLOGIQUES

(30) Priority: 11.04.2018 PT 2018110679
(43) Date of publication of application: 17.02.2021
(73) Proprietor: Isens - Electrónica, Lda., 4465-591 Leça do Balio (PT)
(72) Inventor: GUEDES, Pedro Ernesto, Porto, 4150-178 (NI)
(74) Representative: Patentree
(86) International application number: PCT/IB2019/053000
(87) International publication number: WO 2019/198028

(56) References cited:
- EP-A1- 2 668 847
- WO-A1-2017/149468
- WO-A1-2017/149468
- WO-A1-2017/158579
- WO-A1-2017/158579
- WO-A1-2018/005129
- WO-A1-2018/005129
- US-A1- 2014 180 953

## Description

### Technical Domain

The present disclosure relates to a case for transporting, packaging and monitoring of biological samples namely, blood, urine, saliva, blood cultures, biological fluid samples, among others.

### Background

Biological samples, such as urine, blood, tissues, cells, DNA, RNA and proteins from humans, animals or plants, are stored in appropriate containers and used for biological and laboratory investigations. These samples can also be used for laboratory studies.

Currently, biological samples should be collected into a primary package, termed tube, properly sealed and identified. As a rule, the sample, which comes from a collection point or a hospital, must be packed in a secondary package (crystal case) and stored in a refrigerator or a thermal box, so that the temperature can be stabilized until being removed from transport.

The biological sample should also be carried by trained professionals as to the biosafety rules and the standardized rules for packaging and transport of biological samples. In order to guarantee the quality of the whole process, the transport of the samples must be carried out in an external package (thermal box), which is an isothermal, hygienizable and impermeable container. In conventional solutions, a laser thermometer is typically used to guarantee the temperature control of the material being transported. In addition to the temperature control, the time spent in transport must also be controlled, thus ensuring the stability of the biological samples from collection to the actual test moment.

As such, the transport of biological samples requires careful monitoring of the temperature and duration of said transport for quality control purposes. This monitoring was only possible using solutions that depended on the user identifying the samples and manually registering the beginning and end of events in the transport thereof.

Document WO 2017/158579 A1, for which the preamble of claim 1 relates, relates to a system for transporting goods comprising one or more containers which are adapted to contain goods, which containers communicate with a remote unit. Each container has a housing compartment for goods, which housing compartment is delimited by one or more walls and has at least one opening, which opening is closed by a cover element. The cover element comprises at least one sensor for detecting the accelerations acting on the container, said cover element having at least one transmit/receive unit for communication with said remote unit.

Document WO 2017/149468 A1 discloses a method and a system for controlling biological samples acquired at least at one retrieval site and intended to be subjected to clinical analysis at an analysis site, wherein at least one population of said biological samples is placed in respective collection units in a pre-analytical phase and transported from a retrieval station to an analysis station. A probe collection unit includes sensor means for the acquisition of transport parameters, and associated it is to the population of biological samples during transport from the retrieval station to said analysis station, so as to be substantially exposed to the transport conditions to o which said population of biological samples is subjected. A database system processes an associative relationship between the identification data of at least one population of biological samples associated with at least one retrieval site of samples and at least one respective sampling time, measurement data of the transport parameters of the population of biological samples detected by the acquisition sensors of the transport parameters of the probe collection unit in the transport from the retrieval station to the analysis station, and the result data from clinical analysis carried out on the population of biological samples at an analysis site.

Document WO 2018/005129 A1 discloses a method of reducing quality problems associated with patient sample collection and delivery is provided. It is possible that the method can provide a chain of custody process to better track a sample from the initial point of sample collection to the final point of sample testing. Such a method can also include providing an alert to indicate a potential problem with the quality of the diagnostic test result when a measured parameter exceeds a threshold.

### General Description

The invention comprises a case for packaging and monitoring biological samples as defined by claim 1.

In fact, none of the existing solutions can solve the technical problems for the correct transport and control of the biological samples: firstly with the automatic identification of the samples that would not require the registration by the operator and secondly with the automation of some of the transport records - in some cases by automating the recording of temperatures, but not the beginning and end of transport.

In the latter case, it should be noted that there are solutions where the beginning and end of transport can be automated but temperatures and vibrations during transport cannot be registered.

Furthermore, only some of these solutions meet the standard UN3373:2007.

The advantages of the case of the present disclosure are:
- has no software;
- does not require procedures by the transport operator;
- complies with the packaging, labeling and documentation requirements for category B infectious substances (UN3373: 2007);
- has a low energy consumption, since it is not necessary to recharge the case, in a preferred embodiment it suffices changing (common) batteries once/year.

In this context, a device for controlling and monitoring biological samples, referred to in the present disclosure, has been developed, since it allows automatically detecting the beginning of transport with the simple introduction of tube support (base), which has already automatically identified the samples in transport as described in EP09807500.5.

The present disclosure further allows the registration of sample transport temperature monitoring to begin automatically.

In one embodiment, RFID (Radio Frequency Identification) technology is applied for the registration automation without operator intervention. This device comprises an electronic system which detects the presence of a passive RFID sample holder in which it automatically starts writing the defined transport parameters.

In one embodiment, the RFID is configured to apply the solution in EP 09 807 500.5, thus this solution allows to extend the sample tracing not only in the collection and storage, but also in the sample transport. Moreover, this choice does not need the use of the software in the solution, since the electronics is enough to continuously register and the software is present only at the previous and later levels (upstream/downstream using the Indexor^{®} solution) and also allows to continuously collect transport and packaging conditions.

The transport case of the present disclosure enables the operator to be warned on risk behaviors in order to avoid damage to the samples and repetitions of unnecessary collections.

In one embodiment, the selection of material is due to excellent mechanical characteristics (impact and wear resistance) and also to good chemical resistance which allows for cleaning and disinfecting the case without deterioration of the material.

One aspect of the present invention is defined by claim 1.

In one embodiment, it may comprise a regular predefined time interval at intervals of 2, 5, 10, 15 min.

According to the present invention, the case comprises 2 RFID antennas. In an embodiment it may comprise 3 or 4 RFID antennas.

In one embodiment, the case may comprise 2, 3 or 4 temperature sensors.

In one embodiment, the case may comprise 2, 3 or 4 accelerometers.

In one embodiment, the wall thickness of the case may be comprised between [1-3] cm; preferably [1.5-2.5] cm.

In one embodiment, the case capacity may be comprised between [2 and 10] L; preferably between [4 and 8] L; more preferably between [5 and 7] L.

In one embodiment, the body of the case may be suitable for carrying 2 to 4 bases with biological samples.

In one embodiment, the case may further comprise a moisture sensor, a pressure sensor, an altimeter, a clock, or combinations thereof and means for transmitting the sensed information to the base.

In one embodiment, the case may comprise a lid 377 mm long, 377 mm wide and 54 mm high.

In one embodiment, the case may comprise a body 377 mm long, 377 mm wide and 265 mm high.

In one embodiment, the case may comprise a lid and body set 377 mm long, 377 mm wide and 319 mm high.

In one embodiment, the case may comprise reinforcements at the eight corners to dampen and protect against vibrations.

In one embodiment, the case may further comprise a bar code for identifying the case.

In one embodiment, the case lid may comprise straps for carrying the case.

In one embodiment, the sample is stored in the base with a common identification comprising a one-dimensional or two-dimensional bar code.

In one embodiment, the biological samples may be in tubes, plates, among others.

In one embodiment, the samples are biological fluid, blood, saliva, urine, blood culture samples, among others.

Another object of the present disclosure describes a system for packaging and monitoring biological samples wherein said system comprises an electronic data processor where the temperature and vibration profile of the samples are stored, which are communicated through the RFID antenna.

### Brief Description of the Figures

For an easier understanding of the present disclosure, figures are herein attached, which represent preferred embodiments which however are not intended to limit the object of the present disclosure.

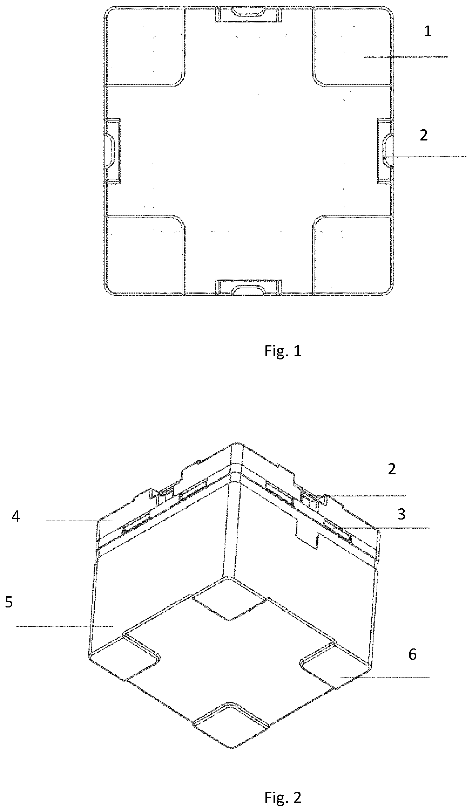

**Figure 1****:** Top view representation of an embodiment of the sample transport case described in the present disclosure:
   (1) Represents recesses for stacking;
   (2) Represents openings for application of the case straps.
**Figure 2****:** Representation of the bottom side view:
   (2) Represents openings for application of the case straps;
   (3) Represents recesses for the hands when opening the lid;
   (4) Represents the lid (upper part);
   (5) Represents the case (lower part);
   (6) Represents protrusions for stacking.
**Figure 3****:** Upper side view representation of an embodiment of the sample transport case described in the present disclosure wherein:
   (1) Represents recesses for stacking;
   (2) Represents openings for application of the case straps;
   (3) Represents recesses for the hands when opening the lid;
   (6) Represents protrusions for stacking;
   (4) Represents the lid on the upper part of the case;
   (5) Represents the body of the case.

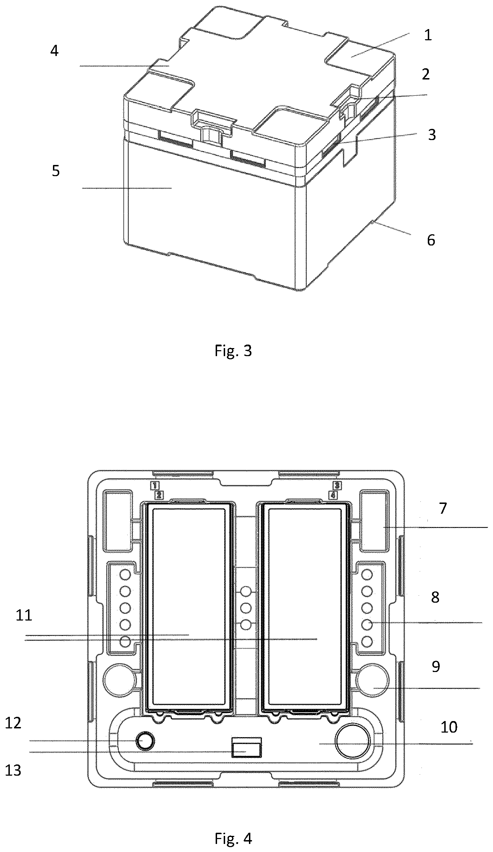

**Figure 4****:** Inside view representation of an embodiment of the body of the sample transport case described in the present disclosure:
   (7) Represents the opening for different types of samples;
   (8) Represents the opening for smear tubes;
   (9) Represents the opening for placing urine or stool sample cups;
   (10) Represents the opening for electronic part (external view - corner for the batteries);
   (11) Represents the inner grid or frame;
   (12) Represents the button to turn on the control and/or cooling system of the case;
   (13) Represents the screen for validation/checking the sample packaging.

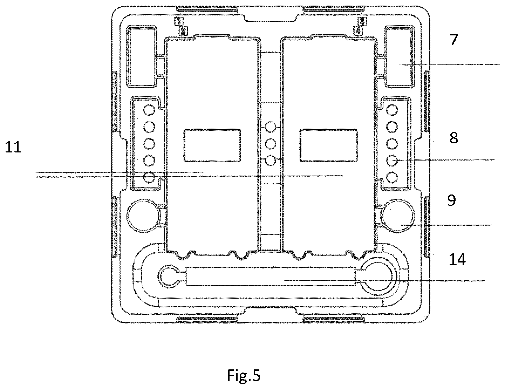

**Figure 5****:** Inside view representation of an embodiment of the sample transport case described in the present disclosure:
   (7) Represents the opening for different types of samples;
   (8) Represents the opening for smear tubes;
   (9) Represents the opening for placing urine or stool sample cups;
   (14) Represents the opening for part of the electronic circuit;
   (11) Represents the space for the inner grid or frame with two compartments.

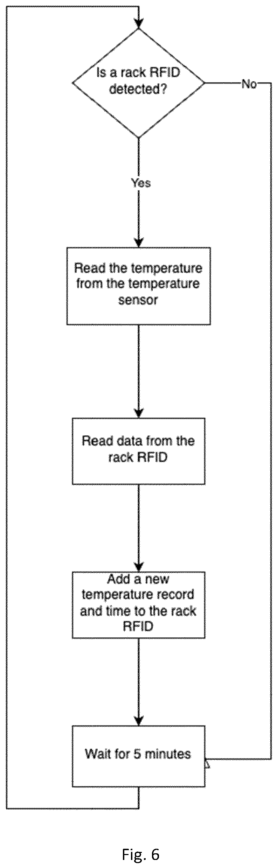

**Figure 6****:** Representation of an embodiment of the control system for packaging and transporting of samples.

The term "comprises" or "comprising" when used herein is intended to indicate the presence of the features, elements, integers, steps and components mentioned, but does not preclude the presence or addition of one or more other features, elements, integers, steps and components, or groups thereof.

The present disclosure is of course in no way restricted to the embodiments described herein and a person of ordinary skill in the art can foresee many possibilities of modifying it and replacing technical features with equivalents depending on the requirements of each situation as defined in the appended claims.

The following claims further define embodiments.

## Claims

1. Case for packaging and monitoring biological samples comprising:
a body with internal space for storing the samples and an upper lid for closing the body;
spaces suitable for receiving a plurality of bases with identified biological samples;
at least one temperature sensor suitable for sensing the transport temperature profile;
at least one accelerometer suitable for sensing the sample transport vibrations;
a data processor programmed for sending within a predefined time interval the temperature and vibration information gathered by the sensor and the accelerometer, respectively;
at least one radio frequency identification antenna - RFID - for communicating the information gathered to the plurality of bases, wherein each base is suitable for storing and transmitting the information sent by the antenna;
wherein the case material is selected from a list comprised of: expanded polypropylene, synthetic polymer foams, or mixtures thereof;
wherein the predefined time interval is regular;
wherein the case comprises 2 RFID antennas.

2. Case according to any one of the previous claims wherein the predefined time interval is regular at intervals of 2, 5, 10, 15 min.

3. Case according to any one of the previous claims wherein the case comprises 3 or 4 RFID antennas and/or 2, 3 or 4 temperature sensors and/or 2, 3 or 4 accelerometers.

4. Case according to any one of the previous claims wherein the thickness of the case walls is comprised between [1-3] cm; preferably [1.5-2.5] cm.

5. Case according to any one of the previous claims wherein the case capacity is comprised between [2 and 10] L; preferably between [4 and 10] L; more preferably between [5 and 7] L.

6. Case according to any one of the previous claims wherein the body of the case is suitable for carrying 2 to 4 bases with biological samples.

7. Case according to any one of the previous claims further comprising a moisture sensor and/or a pressure sensor.

8. Case according to any one of the previous claims further comprising an altimeter.

9. Case according to any one of the previous claims further comprising a clock.

10. Case according to any one of the previous claims wherein the case comprises a lid 377 mm long, 377 mm wide and 54 mm high and/or a body 377 mm long, 377 mm wide and 265 mm high and/or the lid and body set is 377 mm long, 377 mm wide and 319 mm high.

11. Case according to any one of the previous claims wherein the case comprises reinforcements at the eight corners to dampen and protect against vibrations.

12. Case according to any one of the previous claims further comprising a bar code for identifying the case.

13. Case according to any one of the previous claims wherein the lid comprises straps for carrying the case.

14. Case according to any one of the previous claims further comprising tubes or plates.

## Patentansprüche

1. Behälter zur Verpackung und Überwachung von biologischen Proben, umfassend:
ein Gehäuse mit einem Innenraum zur Aufbewahrung der Proben und einem oberen Deckel zum Verschließen des Gehäuses;
Bereiche, die sich zur Aufnahme einer Vielzahl von Trägern mit identifizierten biologischen Proben eignen;
mindestens einen Temperatursensor, der geeignet ist, das Temperaturprofil für den Transport zu erfassen;
mindestens einen Beschleunigungsmesser, der geeignet ist, die Schwingungen während des Transports der Proben zu erfassen;
einen Datenprozessor, der so programmiert ist, dass er innerhalb eines vorgegebenen Zeitintervalls die von dem Sensor und dem Beschleunigungsmesser erfasste Temperatur und Schwingungen sendet;
mindestens eine Antenne für die Radiofrequenz-Identifikation - RFID - für die Übermittlung der gesammelten Informationen an die Vielzahl von Trägern, wobei jeder Träger geeignet ist, die von der Antenne gesendeten Informationen zu speichern und zu übertragen;
wobei das Gehäusematerial aus einer Liste ausgewählt ist, bestehend aus: expandiertem Polypropylen, synthetischen Polymerschäumen oder Mischungen davon;
wobei das vorgegebene Zeitintervall regelmäßig ist;
wobei das Gehäuse 2 RFID-Antennen umfasst.

2. Behälter nach einem der vorangehenden Ansprüche, wobei das vorgegebene Zeitintervall regelmäßige Intervalle von 2, 5, 10, 15 Minuten umfasst.

3. Behälter nach einem der vorangehenden Ansprüche, wobei das Gehäuse 3 oder 4 RFID-Antennen und/oder 2, 3 oder 4 Temperatursensoren und/oder 2, 3 oder 4 Beschleunigungsmesser umfasst.

4. Behälter nach einem der vorangehenden Ansprüche, wobei die Stärke der Gehäusewände zwischen [1-3] cm; bevorzugt [1,5-2,5] cm, liegt.

5. Behälter nach einem der vorangehenden Ansprüche, wobei das Fassungsvermögen des Gehäuses zwischen [2 und 10] I; bevorzugt zwischen [4 und 10] I; besonders bevorzugt zwischen [5 und 7] I liegt.

6. Behälter nach einem der vorangehenden Ansprüche, wobei das Gehäuse des Behälters für den Transport von 2 bis 4 Trägern mit biologischen Proben geeignet ist.

7. Behälter nach einem der vorangehenden Ansprüche, ferner umfassend einen Feuchtigkeitssensor und/oder einen Drucksensor.

8. Behälter nach einem der vorangehenden Ansprüche, ferner umfassend einen Höhenmesser.

9. Behälter nach einem der vorangehenden Ansprüche, ferner umfassend eine Uhr.

10. Behälter nach einem der vorangehenden Ansprüche, wobei das Gehäuse einen Deckel mit einer Länge von 377 mm, einer Breite von 377 mm und einer Höhe von 54 mm und/oder einen Körper mit einer Länge von 377 mm, einer Breite von 377 mm und einer Höhe von 265 mm umfasst und/oder das Set aus Deckel und Körper 377 mm lang, 377 mm breit und 319 mm hoch ist.

11. Behälter nach einem der vorangehenden Ansprüche, wobei der Behälter an den acht Ecken Verstärkungen zur Dämpfung und zum Schutz gegen Schwingungen aufweist.

12. Behälter nach einem der vorangehenden Ansprüche, ferner umfassend einen Strichcode zur Identifizierung des Behälters.

13. Behälter nach einem der vorangehenden Ansprüche, wobei der Deckel Gurte zum Tragen des Behälters aufweist.

14. Behälter nach einem der vorangehenden Ansprüche, ferner umfassend Röhren oder Platten.

## Revendications

1. Étui d'emballage et de surveillance d'échantillons biologiques comprenant :
un corps avec un espace interne pour stocker les échantillons et un couvercle supérieur pour fermer le corps ;
des espaces adaptés pour recevoir une pluralité de bases avec des échantillons biologiques identifiés ;
au moins un capteur de température adapté pour capter le profil de température de transport ;
au moins un accéléromètre adapté pour capter les vibrations de transport de l'échantillon ;
un traiteur de données programmé pour envoyer dans un intervalle de temps prédéfini les informations de température et de vibration recueillies par le capteur et l'accéléromètre, respectivement ;
au moins une antenne d'identification par radiofréquence - RFID - pour communiquer les informations recueillies a la pluralité de bases, dans laquelle chaque base est adaptée pour stocker et transmettre les informations envoyées par l'antenne ;
dans lequel le matériau de l'étui est choisi parmi une liste comprenant : du polypropylène expansé, des mousses polymères synthétiques, ou des mélanges de ceux-ci ;
dans lequel l'intervalle de temps prédéfini est régulier ;
dans lequel l'étui comprend 2 antennes RFID.

2. Étui selon l'une quelconque des revendications précédentes dans lequel l'intervalle de temps prédéfini est régulier à des intervalles de 2, 5, 10, 15 min.

3. Étui selon l'une quelconque des revendications précédentes dans lequel l'étui comprend 3 ou 4 antennes RFID et/ou 2, 3 ou 4 capteurs de température et/ou 2, 3 ou 4 accéléromètres.

4. Étui selon l'une quelconque des revendications précédentes dans lequel l'épaisseur des parois de l'étui est comprise entre [1-3]cm ; préférablement [1,5-2,5]cm.

5. Étui selon l'une quelconque des revendications précédentes dans lequel la capacité de l'étui est comprise entre [2 et 10]L; préférablement entre [4 et 10]L ; plus préférablement entre [5 et 7]L.

6. Étui selon l'une quelconque des revendications précédentes dans lequel le corps de l'étui est adapté pour transporter 2 à 4 bases avec des échantillons biologiques.

7. Étui selon l'une quelconque des revendications précédentes comprenant également un capteur d'humidité et/ou un capteur de pression.

8. Étui selon l'une quelconque des revendications précédentes comprenant également un altimètre.

9. Étui selon l'une quelconque des revendications précédentes comprenant également une horloge.

10. Étui selon l'une quelconque des revendications précédentes dans lequel l'étui comprend un couvercle de 377mm de longueur, 377mm de largeur et 54mm de hauteur et/ou un corps de 377mm de longueur, 377mm de largeur et 265mm de hauteur et/ou l'ensemble couvercle et corps est de 377mm de longueur, 377mm de largeur et 319mm de hauteur.

11. Étui selon l'une quelconque des revendications précédentes dans lequel l'étui comprend des renforts sur les huit coins pour atténuer et protéger des vibrations.

12. Étui selon l'une quelconque des revendications précédentes comprenant également un code-barres pour identifier l'étui.

13. Étui selon l'une quelconque des revendications précédentes dans lequel le couvercle comprend des lanières pour transporter l'étui.

14. Étui selon l'une quelconque des revendications précédentes comprenant également des tubes ou plaques.
